# EUROPÄISCHE PATENTSCHRIFT

(11) **EP 2 131 308 B1**
(45) Veröffentlichungstag und Bekanntmachung des Hinweises auf die Patenterteilung: **10.04.2013**
(21) Anmeldenummer: 09161220.0
(22) Anmeldetag: 27.05.2009
(51) Int. Cl.: G06K 9/00

(54) **Verfahren und Vorrichtung zum Klassifizieren eines in mindestens einem Bild einer Abbildung eines Bereichs vor einem Fahrzeug detektierten Objekts**
Method and device for classifying an object detected in at least one image of an area visualised in front of a vehicle
Procédé et dispositif de classification d'un objet détecté dans au moins une image d'une zone à l'avant d'un véhicule

(30) Priorität: 30.05.2008 DE 102008025749
(43) Veröffentlichungstag der Anmeldung: 09.12.2009
(73) Patentinhaber: Hella KGaA Hueck & Co., 59552 Lippstadt (DE)
(72) Erfinder: Hoffmann, Ingo, 13089 Berlin (DE); Schmidt, Christian, 33106, Paderborn (DE)
(74) Vertreter: Schaumburg, Thoenes, Thurn, Landskron, Eckert

(56) Entgegenhaltungen:
- EP-A- 0 626 655
- US-A1- 2007 031 006

## Beschreibung

Die Erfindung betrifft ein Verfahren und eine Vorrichtung zum Klassifizieren eines in mindestens einem Bild einer Abbildung des Bereichs vor einem Fahrzeug detektierten Objekts. Moderne Fahrzeugassistenzsysteme benötigen Informationen über Objekte in der Umgebung des Fahrzeugs und die jeweilige Assistenzfunktion bereitzustellen.

Es ist bekannt, zum Detektieren von Objekten mindestens ein Bild mit einer Abbildung eines Bereichs vor dem Fahrzeug zu erfassen und dem Bild entsprechende Bilddaten zu erzeugen. Die Bilddaten werden dann verarbeitet und Objekte detektiert und klassifiziert. Die für das jeweilige Assistenzsystem relevanten klassifizierten Objekte werden dann vom Assistenzsystem vorzugsweise zusammen mit weiteren Informationen weiterverarbeitet. So sind relevante Objekte für ein Verkehrszeichenerkennungssystem klassifizierte Verkehrszeichen für ein Fahrspurassistenzsystem klassifizierte Straßenmarkierungen, Leitpfosten, Warnbaken und Verkehrszeichen sowie für ein Lichtassistenzsystem insbesondere klassifizierte Fahrzeuge anderer Verkehrsteilnehmer. Bei einer fehlerhaften Klassifizierung einzelner Objekte kann dann gegebenenfalls ein Assistenzsystem nicht oder nicht angemessen auf ein Objekt reagieren bzw. dieses Objekt entsprechend bei der Auswertung der Verkehrssituation und/oder bei einem durch dieses Assistenzsystem gesteuerten Vorgang berücksichtigen.

Aus dem Dokument EP 0 230 620 B1 ist eine Scheinwerferanlage für Kraftfahrzeuge bekannt, die eine im Fahrzeug angeordnete Vorrichtung hat. Die Vorrichtung registriert eine von mindestens einem Sensor aufgenommene Verkehrssituation vor dem Fahrzeug. Durch die Vorrichtung ist abhängig von der Verkehrssituation ein Mittel zur Änderung der Lichtverteilung des abgegebenen Lichts ansteuerbar.

Aus dem Dokument US 2007/0031006 A1 sind ein System und ein Verfahren zum Erkennen von die Sicht auf eine vor einem Fahrzeug liegende Straßenszene beeinträchtigenden Elementen, insbesondere von Nebel, bekannt. Hierzu wird ein Bild mit einer Abbildung der vor dem Fahrzeug liegenden Straßenszene ermittelt. In diesem Bild wird ein durch eine Beleuchtungsvorrichtung des Fahrzeugs erzeugter Beleuchtungsbereich ermittelt. Ferner wird die Form des Beleuchtungsbereichs durch eine elliptische Kurve approximiert und der Approximationsfehler zwischen der ermittelten elliptischen Kurve und der in dem Bild ermittelten Form des Beleuchtungsbereichs ermittelt. Hieraus das Vorhandensein von Nebel detektiert.

Aus dem Dokument EP 0 626 655 A2 ist ein Fahrzeugerkennungsgerät bekannt, das ein vorausfahrendes Fahrzeug anhand von Straßenbildern erkennt.

Aufgabe der Erfindung ist es, ein Verfahren und eine Vorrichtung zum Klassifizieren von in mindestens einem Bild einer Abbildung des Bereichs vor einem Fahrzeug detektierten Objekten anzugeben, bei denen zumindest die Klassifizierungsqualität beim Klassifizieren von Objekten verbessert ist.

Diese Aufgabe wird durch ein Verfahren zum Klassifizieren mindestens eines in mindestens einem Bild einer Abbildung des Bereichs vor einem

Fahrzeug detektierten Objekts mit den Merkmalen des Patentanspruchs 1 sowie durch eine Vorrichtung mit den Merkmalen des unabhängigen Vorrichtungsanspruchs 10 gelöst. Vorteilhafte Weiterbildungen der Erfindung sind in den abhängigen Patentansprüchen angegeben.

Durch ein Verfahren und eine Vorrichtung zum Klassifizieren mindestens eines in mindestens einem Bild einer Abbildung des Bereichs vor einem Fahrzeug detektierten Objekts, bei dem die Lichtverteilung des durch mindestens einen Frontscheinwerfer des Fahrzeugs abgestrahlten Lichts beim Klassifizieren des Objekts berücksichtigt wird, wird erreicht, dass anhand der ermittelten Helligkeit der Abbildung des Objekts und der Anstrahlung des Objekts in Folge der Lichtverteilung des mindestens einen Frontscheinwerfers, die Position, die Lage und/oder der Objekttyp des Objekts mit hoher Wahrscheinlichkeit ermittelt werden kann. Insbesondere kann ermittelt werden, ob das Objekt ein lichtreflektierendes Objekt oder ein selbstleuchtendes Objekt ist. Insbesondere wenn das Objekt in einem Bereich des Bildes detektiert wird, bei dem davon auszugehen ist, dass in dem Bereich vor dem Fahrzeug, in dem sich das Objekt tatsächlich befindet, aufgrund der Lichtverteilung des Frontscheinwerfers eine ausreichende Lichtmenge und/oder ausreichende Lichtstärke auftrifft, um bei einem lichtreflektierenden Element die erfasste Helligkeit der Abbildung des Objekts zu bewirken, kann das Objekt gegebenenfalls unter Berücksichtigung weiterer Informationen über das Objekt und/oder das Fahrzeug und/oder die Umgebung des Fahrzeugs, als lichtreflektierendes Objekt, wie beispielsweise als Leitpfosten, Warnbake oder Verkehrszeichen, klassifiziert werden. Befindet sich das Objekt jedoch in einem Bereich vor dem Fahrzeug, in dem aufgrund der Lichtverteilung der Frontscheinwerfer nur eine relativ geringe Lichtmenge abgegeben und somit nur eine geringe Lichtmenge auf das Objekt trifft, die bei der Abbildung des lichtreflektierenden Objekts im Bild nicht die im Bild erfasste Helligkeit der Abbildung des Objekts bewirken kann, wird das Objekt nicht als lichtreflektierendes Element sondern vielmehr als selbstleuchtendes Objekt klassifiziert werden. Vorzugsweise wird aufgrund der Position der Abbildung des Objekts im Bild und der bei der Bildaufnahme durch die Frontscheinwerfer erzeugten Lichtverteilung nur ein geringer Wahrscheinlichkeitswert oder ein Wahrscheinlichkeitswert gleich Null dafür angesetzt, dass das abgebildete Objekt ein lichtreflektierendes Objekt ist. Insbesondere kann die Wahrscheinlichkeit, dass es sich um ein lichtreflektierendes Objekt handelt, herabgesetzt werden, wenn die erfasste Helligkeit der Abbildung des Objekts aufgrund der bei der Bildaufnahme vorhandenen Lichtverteilung des Frontscheinwerfers nicht allein durch ein lichtreflektierendes Objekt sondern vielmehr nur durch ein selbstleuchtendes Objekt bewirkt sein kann. Andernfalls wird die Wahrscheinlichkeit, dass es sich bei dem Objekt um ein lichtreflektierendes Objekt handelt, nicht herabgesetzt sondern kann abhängig vom Klassifizierungsverfahren erhöht werden.

Bei einer vorteilhaften Weiterbildung wird das Bild mit Hilfe einer Bilderfassungseinheit des Fahrzeugs erfasst. Die Bilderfassungseinheit erzeugt die Bilddaten des Bildes. Bei der Verarbeitung der Bilddaten mit Hilfe eines von einer Verarbeitungseinheit abgearbeiteten Bildverarbeitungsalgorithmus wird eine Abbildung des Objekts im Bild detektiert. Dadurch ist eine einfache Detektion von Abbildungen von Objekten im Bild möglich, die sich im durch die Bilderfassungseinheit des Fahrzeugs erfassten Bereich befinden. Als Bilderfassungseinheit kann eine Frontkamera des Fahrzeugs, insbesondere eine monokulare Kamera und/oder eine Stereokamera sein, wobei die Bilderfassungseinheit Graustufenbilder und/oder Farbbilder erfasst.

Weiterhin ist es vorteilhaft, wenn das detektierte Objekt nicht als reflektierendes Objekt klassifiziert wird, wenn die Abbildung des Objekts in einem Bereich des Bildes detektiert wird, in dem aufgrund der bei der Bildaufnahme erzeugten Lichtverteilung des durch den mindestens einen Frontscheinwerfer des Fahrzeugs abgestrahlten Lichts keine für eine Reflexion eines lichtreflektierenden Objekts auf die Entfernung des Objekts zum Fahrzeug bezogene ausreichende Beleuchtungsstärke erzeugt und/oder ausreichende Lichtmenge abgegeben wird. Dadurch kann auf einfache Art und Weise ein Klassifizierungsmerkmal zum Klassifizieren eines Objekts ermittelt und ggf. zusammen mit mindestens einem weiteren Klassifizierungsmerkmal bei der Klassifizierung des Objekts berücksichtigt werden.

Ferner ist es vorteilhaft, für mindestens eine Lichtverteilung einen Reflexionsbereich voreinzustellen, in dem das bei dieser Lichtverteilung von lichtreflektierenden Elementen reflektierte Licht zu der ermittelten Helligkeit der detektierten Abbildung des Objekts führen kann und außerhalb dessen das bei dieser Lichtverteilung von lichtreflektierenden Objekten reflektierte Licht nicht zu der ermittelten Helligkeit der detektierten Abbildung des Objekts führt. Dadurch kann auf einfache Art und Weise ein Klassifizierungsmerkmal gewonnen werden, dass die Klassifizierungswahrscheinlichkeit erhöht oder vermindert, dass es sich bei dem abgebildeten Objekt um ein lichtreflektierendes Element handelt. Alternativ oder zusätzlich kann die Wahrscheinlichkeit für das abgebildete Objekt erhöht bzw. verringert werden, dass es sich bei dem Objekt nicht um ein lichtreflektierendes Element handelt.

Besonders vorteilhaft ist es, für mindestens zwei mögliche Lichtverteilungen des mindestens einen Frontscheinwerfers je einen Reflexionsbereich voreinzustellen. Der Reflexionsbereich wird beim Klassifizieren des Objekts berücksichtigt, wenn die dem Reflexionsbereich zugeordnete Lichtverteilung durch den mindestens einen Frontscheinwerfer erzeugt wird. Dabei ist es vorteilhaft, wenn der Bereich außerhalb des voreingestellten Reflexionsbereichs als Nichtreflexionsbereich beim Klassifizieren von Objekten berücksichtigt wird, wobei im Nichtreflexionsbereich das von lichtreflektierenden Elementen reflektierte Licht nicht zu einer ermittelten Helligkeit der detektierten Abbildung des Objekts führen kann. Dieser Nichtreflexionsbereich ist abhängig von der Lichtverteilung des von dem Frontscheinwerfern abgestrahlten Lichts, der Entfernung des Objekts zum Fahrzeug und der im durch die Frontkamera aufgenommenen Bild detektierten Helligkeit des Objekts, d.h. dem von ihm hervorgerufenen Grauwertverteilung im durch die Frontkamera aufgenommen Bild. Dadurch ist eine einfache Klassifizierung von Objekten möglich, wobei für mehrere Klassifizierungshypothesen abhängig von der Lichtverteilung und der Helligkeit der Abbildung des Objekts im Bild die Wahrscheinlichkeit erhöht bzw. verringert werden kann, dass es sich bei dem abgebildeten Objekt um ein Objekt des der jeweiligen Hypothese zugeordneten Objekttyps handelt.

Ferner ist es möglich, dass ein Bewertungsverfahren zum Klassifizieren des Objekts die Detektion der Abbildung des Objekts im Reflexionsbereich als Klassifizierungsparameter verarbeitet. Weitere Klassifizierungsparameter, wie die Helligkeit und/oder die Farbe der detektierten Abbildung des Objekts, vorhandene Positionsinformationen über die Position des Objekts, vorzugsweise über die Entfernung des Objekts zur Bilderfassungseinheit, vorhandene Größeninformationen über die Größe des Objekts, eine mit Hilfe eines Verfolgungsverfahrens zur Verfolgung des Objekts (Trackingverfahren) in mehreren nacheinander als Bildfolge aufgenommenen Bildern des Bereichs vor dem Fahrzeug ermittelte Information und/oder die Lage des Objekts zu weiteren detektierten Objekten, können von dem Bewertungsverfahren verarbeitet werden. Durch die Berücksichtigung der Beleuchtung des Objekts durch die Frontscheinwerfer des Fahrzeugs und vorzugsweise weiterer Klassifizierungsparameter durch das Bewertungsverfahren kann auf einfache Art und Weise eine Wahrscheinlichkeit ermittelt werden, dass es sich bei dem Objekt um ein Objekt eines Objekttyps handelt, der lichtreflektierende Elemente umfasst.

Ist ein Reflektionsbereich aufgrund der aktuellen Lichtverteilung der Frontscheinwerfer im Bild durch eine Voreinstellung festgelegt, in dem Abbildungen lichtreflektierender Elemente einen voreingestellten Helligkeitswert überschreiten können, so muss dieser Reflexionsbereich nicht mit einer Isoluxlinie der vom Frontscheinwerfer erzeugten Helligkeitsverteilung zusammenfallen. Dies ist insbesondere darin begründet, dass für die erfasste Helligkeit der Abbildung des Objekts nicht nur die Intensität, mit der das Objekt angestrahlt wird, sondern auch der Anstrahl- und Reflexionswinkel, mit dem das Licht der Frontscheinwerfer auf das Objekt abgestrahlt und vom Objekt reflektiert wird, ausschlaggebend ist.

Die durch den unabhängigen Vorrichtungsanspruch spezifizierte Vorrichtung kann in gleicher Weise weitergebildet werden wie das Verfahren nach Anspruch 1. Insbesondere kann die Vorrichtung mit den in den abhängigen Patentansprüchen angegebenen Merkmalen bzw. durch entsprechende Vorrichtungsmerkmale weitergebildet werden.

Als Bilderfassungseinheit eignet sich insbesondere eine bekannte Fahrzeugkamera. Die Bilderfassungseinheit kann insbesondere eine monokulare Kamera, mehrere monokulare Kameras, ein Stereokamerasystem oder mehrere Stereokamerasysteme umfassen, wobei die einzelnen Kameras Bilddaten von Graustufenbildern oder Farbbildern erzeugen. Besonders vorteilhaft ist die Verwendung einer Kamera mit mindestens einem CMOS-Bilderfassungssensor, der vorzugsweise Graustufenbilder erzeugt. Beispielsweise hat die Bilderfassungseinheit einen Active-Pixel-Sensor als Bilderfassungssensor.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: eine schematische Darstellung einer Verkehrssituation mit einem Fahrzeug und einem seitlich der Fahrbahn angeordnetem Verkehrsschild als Seitenansicht;
- Figur 2: ein Diagramm mit einer Lichtverteilung des durch die Frontscheinwerfer eines Fahrzeuges abgestrahlten Lichts auf einer senkrechten Reflexionsebene vor dem Fahrzeug bei Abblendlicht; und
- Figur 3: ein Diagramm mit einer Lichtverteilung des durch die Frontscheinwerfer eines Fahrzeuges abgestrahlten Lichts auf einer senkrechten Reflexionsebene vor dem Fahrzeug bei Fernlicht.

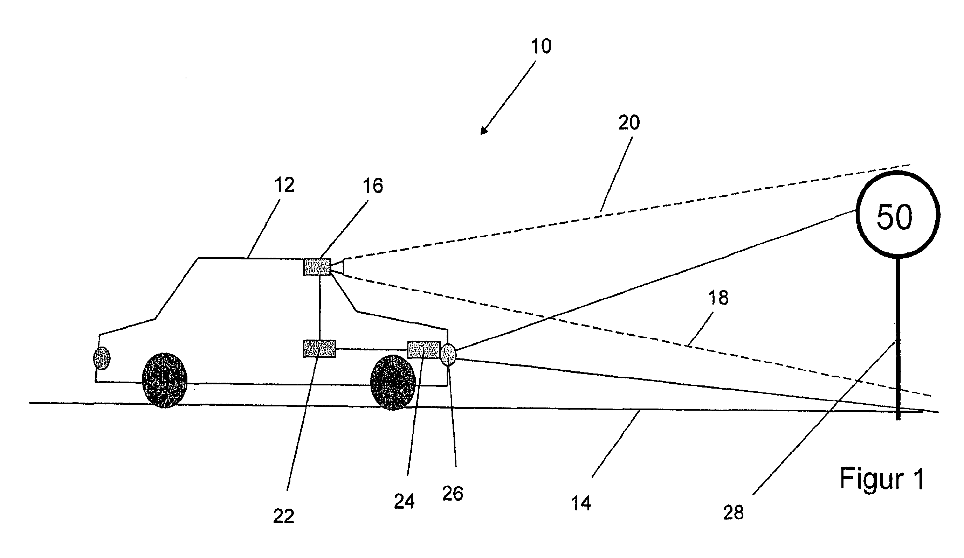

In Figur 1 ist eine Verkehrssituation gemäß einer ersten Ausführungsform der Erfindung dargestellt, bei der ein Fahrzeug 12 dargestellt ist, das entlang dem Fahrbahnverlauf einer Fahrbahn 14 fährt. Das Fahrzeug 12 hat eine Frontkamera 16, die eine Bildfolge mit Bildern eines Erfassungsbereichs vor dem Fahrzeug 12 erfasst. Der Erfassungsbereich ist in Figur 1 durch die Strichlinien 18, 20 begrenzt. Mit Hilfe der Frontkamera 16 werden somit Bilder mit Abbildungen von im Erfassungsbereich vorhandenen Objekten erfasst, die als Bilddaten von der Frontkamera 16 zu einer im Fahrzeug 12 angeordneten Verarbeitungseinheit 22 übertragen werden. Mit Hilfe der Frontkamera 16 werden die im Erfassungsbereich vor dem Fahrzeug 12 vorhandenen Objekte, wie das in Figur 1 dargestellte seitlich der Fahrbahn 14 angeordnete Verkehrsschild 28, erfasst. Die Bilddaten des Objekts 28 werden dann von der Verarbeitungseinheit 22 verarbeitet, wobei die Abbildung des Objekts 28 als Objekt detektiert und klassifiziert wird. In gleicher Weise werden als Objekte detektierte auf der Fahrbahn 14 vorausfahrende Fahrzeuge und auf einer Gegenfahrbahn der Fahrbahn 14 entgegenkommende Fahrzeuge als Objekte detektiert und mit Hilfe der Verarbeitungseinheit 22 klassifiziert.

Die Frontkamera 16 ist vorzugsweise eine Stereokamera, mit der die Entfernung eines Objekts zur Stereokamera und somit die Position von erfassten Objekten in einem Fahrzeugkoordinatensystem bestimmt werden kann. Ein solches Objekt ist beispielsweise das dargestellte Verkehrsschild 28. Für die detektierten Objekte können jeweils Objektparameter ermittelt werden. Solche Objektparameter können die dreidimensionale Position des Objekts, die dreidimensionale Bewegungsrichtung des Objekts, die Geschwindigkeit des Objekts und/oder die Dauer der Beobachtung des Objekts in einer mit Hilfe der Frontkamera 16 des Fahrzeugs 12 erfassten Bildfolge sein. Diese Objektparameter können als Eingangsgrößen zur Klassifizierung des Objekts durch die Verarbeitungseinheit 22 verwendet werden.

Zur Festlegung der mit Hilfe der Frontscheinwerfer 26 bewirkten Lichtabstrahlung und Lichtverteilung werden als relevante Objekte nur Lichtquellen von Fahrzeugen berücksichtigt, d. h. nur Lichtquellen, die als Scheinwerfer oder Rückleuchten anderer Fahrzeuge klassifiziert worden sind. Nicht relevante Lichtquellen und andere nicht relevante Objekte, wie Straßenlaternen, Verkehrszeichen und Reflektoren von Leitpfosten werden im vorliegenden Ausführungsbeispiel bei der Festlegung der Lichtverteilung der Frontscheinwerfer 26 nicht berücksichtigt. Nur bei den als relevant eingestuften Objekten besteht die Gefahr, dass bei einer falsch eingestellten Lichtverteilung der Frontscheinwerfer 28 andere Verkehrsteilnehmer geblendet werden können und somit gegebenenfalls die Verkehrssicherheit gefährdet ist. Die Lichtverteilung wird dann abhängig von ermittelten relevanten Objekten gesteuert, die in mehreren nacheinander mit Hilfe der Frontkamera des Fahrzeugs aufgenommenen Bildern einer Bildfolge detektiert worden sind.

Informationen über die ausgewählte bzw. festgelegte Lichtverteilung wird von der Verarbeitungseinheit 22 zu einem Lichtsteuermodul 24 übertragen, das eine den übermittelten Informationen entsprechende Lichtverteilung abhängig von den verfügbaren konkreten Einstellmöglichkeiten der Frontscheinwerfer 26 durch eine entsprechende Ansteuerung der Frontscheinwerfer 26 erzeugt.

Im Stand der Technik erfolgt die Klassifizierung der Objekte auf Basis der in der Verarbeitungseinheit 22 hinterlegten Bildverarbeitungsalgorithmen ohne die ausgewählte Lichtverteilung der Frontscheinwerfer 26 des Fahrzeuges 12 zu berücksichtigen. Es ist erkannt worden, dass es vorteilhaft ist, die Bildverarbeitung und die Lichtsteuerung nicht separat zu betrachten, sondern die Auswirkung der Lichtverteilung des durch die Frontscheinwerfer 26 abgestrahlten Lichts auf die Abbildung der detektierten Objekte in den erfassten Bildern der durch die Frontkamera 16 aufgenommen Bildfolge zu berücksichtigen. Hierdurch kann ein besseres Klassifikationsergebnis erreicht werden. Die Anzahl der Fälle, in denen ein relevantes Objekt fälschlicherweise als ein nicht relevantes Objekt klassifiziert wird oder in denen ein nicht relevantes Objekt als relevantes Objekt klassifiziert wird, kann dadurch verringert werden. Hierdurch wird die Verkehrssicherheit erhöht. Wenn nämlich eine relevantes Objekt als nicht relevantes Objekt klassifiziert wird kann dies dazu führen, dass andere Verkehrteilnehmer geblendet und somit gefährdet werden. Wird umgekehrt ein nicht relevantes Objekt als relevantes Objekt klassifiziert, so wird eine defensivere Lichtverteilung bei der Steuerung der Frontscheinwerfer 26 gewählt als es nötig ist. Dadurch wird der Bereich vor dem Fahrzeug 12 nicht optimal ausgeleuchtet.

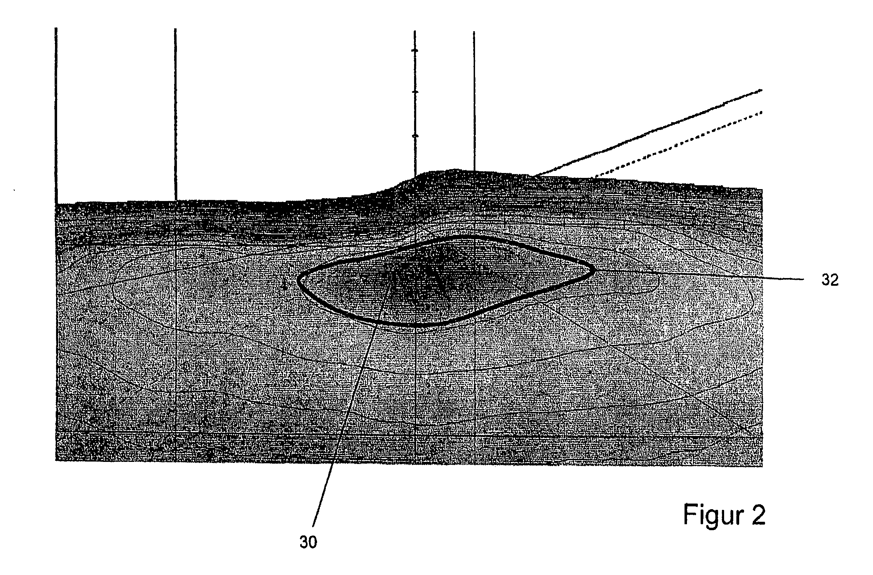

In Figur 2 ist ein Diagramm mit der Lichtverteilung des durch die Frontscheinwerfer 26 eines Fahrzeuges 12 abgestrahlten Lichts auf einer senkrecht vor dem Fahrzeug 12 angeordneten Reflexionsebene vor bei Abblendlicht dargestellt. Elemente mit gleichem Aufbau oder gleicher Funktion haben dieselben Bezugszeichen. In dem dunkel gefärbten Bereich in der Mitte des Diagramms ist die durch die Frontscheinwerfer 26 des Fahrzeugs 12 auf der Reflexionsebene bewirkte Helligkeit am größten. Mit zunehmendem Abstand zur Mitte sinkt die Helligkeit des von den Frontscheinwerfern 26 abgestrahlten und in der Reflexionsebene reflektierten Lichts. Im Diagramm sind mehrere Isoluxlinien eingezeichnet, von denen die Innerste mit dem Bezugszeichen 30 bezeichnet ist. Diese Isoluxlinien sind Linien gleicher Helligkeit, so dass die Helligkeit entlang einer solchen Isoluxlinie konstant ist. Je näher die Isoluxlinien beieinander liegen, umso größer ist die Helligkeitsänderung in diesem Bereich.

In der Mitte des Diagramms ist ein sogenannter Reflexionsbereich vorhanden, der durch die Linie 32 begrenzt ist. Der durch die Linie 32 begrenzte Reflexionsbereich wird zur Vereinfachung ebenfalls mit dem Bezugszeichen 32 bezeichnet. Außerhalb dieses Reflexionsbereichs 32 ist die Wahrscheinlichkeit, dass es sich bei einer mit Hilfe des Bildverarbeitungsalgorithmus der Verarbeitungseinheit 22 in einem durch die Frontkamera 16 aufgenommen Bild detektierten Abbildung um die Abbildung eines stark reflektierenden Objektes handelt, gering. Es handelt sich mit großer Wahrscheinlichkeit um ein selbstleuchtendes Objekt. Bei einem innerhalb des Reflexionsbereichs 32 detektierten Objekts mit relativ großer Helligkeit in den erfassten Bildern kann sich sowohl um ein reflektierenden als auch ein selbstleuchtendes Objekt handeln. Ein selbstleuchtendens Objekt ist beispielsweise selbst eine Lichtquelle oder wird von einer weiteren Lichtquelle angestrahlt. Stark reflektierende Objekte sind beispielsweise Verkehrszeichen, Rückstrahler und Warntafeln von Fahrzeugen, Reflektoren von Verkehrsleiteinrichtungen, wie Reflektoren von Leitpfosten und Warnbarken.

Diese Unterteilung des Diagramms der Lichtverteilung des durch die Frontscheinwerfer 26 eines Fahrzeuges 12 abgestrahlten Lichts auf einer senkrechten Reflexionsebene vor dem Fahrzeug 12 in einen Reflexionsbereich 32 und einen Bereich außerhalb des Reflexionsbereiches 32 mit geringer Reflexionswahrscheinlichkeit kann bei der Klassifizierung der detektierten Objekte in relevante und nicht relevante Objekte berücksichtigt werden. Wird beispielsweise ein Objekt außerhalb des Reflexionsbereiches 32 detektiert, so handelt es sich mit hoher Wahrscheinlichkeit um ein selbstleuchtendes Objekt wie etwa ein anderes Fahrzeug oder eine Straßenlaterne und nicht um ein reflektierendes Objekt wie beispielsweise Verkehrschilder oder Leitpfosten.

Wie im Ausführungsbeispiel gezeigt, muss die Grenze des Reflexionsbereichs 32 nicht mit einer Isoluxlinie 30 zusammenfallen. Die Grenze des Reflexionsbereichs 32 wird durch mehrere Faktoren bestimmt. Der erste Faktor ist die Helligkeit des von den Frontscheinwerfern 26 abgestrahlten Lichtes an der betrachteten Stelle und zum anderen der Winkel, mit dem das von den Frontscheinwerfern 26 abgestrahlte Licht auf das reflektierende Objekt trifft. Verkehrschilder sind im Allgemeinen so konstruiert, dass sie nur bei einem Lichteinfall in einem vorgegebenen Winkelbereich stark reflektieren. Hierdurch soll eine Blendung anderer Verkehrsteilnehmer vermieden werden. Des Weiteren sind die Entfernung des jeweiligen zu klassifizierenden Objekts zum Fahrzeug 12 und die Reflektanz des Objekts für die Lage der Grenze des Reflexionsbereichs 32 von Bedeutung. Die Reflektanz ist dabei vorzugsweise ein Proportionalitätsfaktor, der das Verhältnis zwischen der von einem beleuchteten Körper zurückgestrahlten Lichtmenge und der Intensität der beleuchtenden Quelle bezeichnet. Die Reflektanz ist über das Lichtspektrum hinweg veränderlich, da unterschiedliche Wellenlängen vom reflektierenden Körper unterschiedlich stark zurückgeworfen werden. Im vorliegenden Ausführungsbeispiel ist die beleuchtende Quelle mindestens ein Frontscheinwerfer 26 des Fahrzeugs 12.

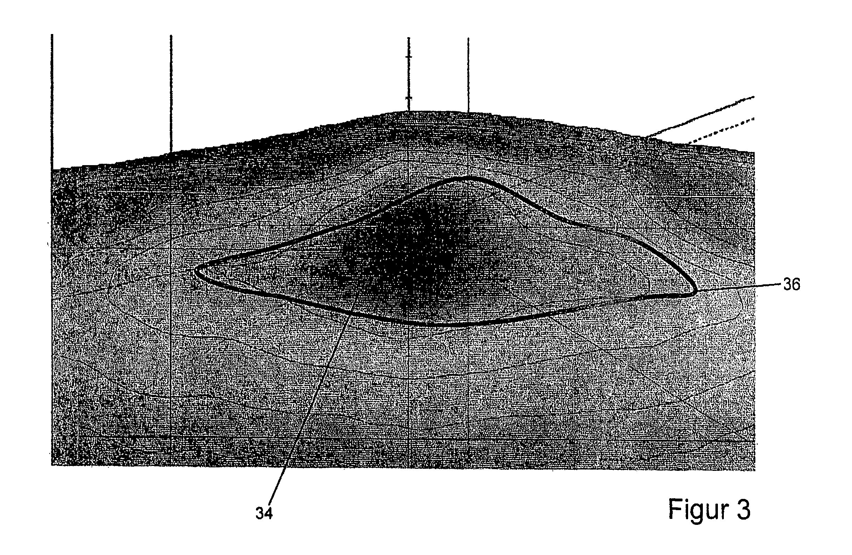

In Figur 3 ist ein Diagramm der Lichtverteilung des durch die Frontscheinwerfer 26 des Fahrzeugs 12 abgestrahlten Lichts auf einer senkrechten Reflexionsebene vor dem Fahrzeug 12 bei Fernlicht gezeigt. Der Reflexionsbereich 36 ist bei Fernlicht größer als der Reflexionsbereich 32 bei Abblendlicht in Figur 2. Auch in Figur 3 fällt die Grenze des Reflexionsbereichs 36 nicht mit einer Isoluxlinie 34 zusammen.

Die aus der Unterteilung in einen Reflexionsbereich 32 und einen Bereich mit geringer Reflexionswahrscheinlichkeit gewonnen Informationen, ob es sich bei einem detektierten Objekt um ein selbstleuchtendes oder ein reflektierendes Objekt handelt, können bei der in Zusammenhang mit Figur 1 bereits näher beschriebenen Klassifizierung der detektierten Objekte in relevante Objekte und nicht relevante Objekte genutzt werden. Hierdurch wird das Klassifikationsergebnis verbessert, was, wie ebenfalls in Zusammenhang mit Figur 1 beschrieben, die Verkehrssicherheit erhöht.

Die Reflexionsbereiche 32, 36 können neben den in Figur 2 und Figur 3 dargestellten Formen eine Vielzahl anderer Formen annehmen. Die Form eines Reflexionsbereichs 32,36 ist unter anderem von der Lichtfigur des von den Frontscheinwerfern 26 des Fahrzeuges 12 abgestrahlten Lichtes abhängig. Solche Lichtfiguren sind beispielsweise aus der Schrift EP 0935728 B1 bekannt. Dabei kann zur Erzeugung von Lichtfiguren insbesondere die VARIOX® Technologie der Anmelderin verwendet werden

## Patentansprüche

1. Verfahren zum Klassifizieren von in mindestens einem Bild einer Abbildung des Bereichs vor einem Fahrzeug detektierten Objekten in selbstleuchtende Objekte und ausschließlich reflektierende Objekte,
bei dem eine Bildfolge aus mehreren Bildern mit einer Abbildung eines Bereichs vor dem Fahrzeug (12) erfasst wird und den Bildern entsprechende Bilddaten erzeugt werden, und
bei dem bei der Verarbeitung der Bilddaten der erfassten Bilder mindestens ein Objekt (28) detektiert wird,
**dadurch gekennzeichnet, dass** in Abhängigkeit der Bilder der Bildfolge jeweils die Position des detektierten Objektes (28) ermittelt wird,
dass das detektierte Objekt (28) in Abhängigkeit der ermittelten Positionen des detektierten Objekts (28) und in Abhängigkeit der Lichtverteilung der durch den mindestens einen Frontscheinwerfer (26) des Fahrzeugs (12) abgestrahlten Lichtstrahlen als selbstleuchtendes oder reflektierendes Objekt klassifiziert wird, und
dass das detektierte Objekt (28) nur dann als reflektierendes Objekt klassifizierbar ist, wenn die Abbildung des Objekts (28) in einem Bereich (32, 34) des Bildes detektiert wird, in dem auf Grund der aktuellen Lichtverteilung der durch den mindestens einen Frontscheinwerfer (26) des Fahrzeugs (12) abgestrahlten Lichtstrahlen eine für eine Reflexion eines reflektierenden Elements ausreichende Beleuchtungsstärke erzeugt wird.

2. Verfahren nach Anspruch 1, **dadurch gekennzeichnet, dass** die Bilder der Bildfolge mit Hilfe einer Bilderfassungseinheit (16) des Fahrzeugs (12) erfasst wird, dass die Bilddaten der Bilder mit Hilfe der Bilderfassungseinheit (16) erzeugt werden, und dass bei der Verarbeitung der Bilddaten mit Hilfe eines von einer Verarbeitungseinheit (22) abgearbeiteten Bildverarbeitungsalgorithmus eine Abbildung des Objekts (28) in mindestens zwei Bildern detektiert wird.

3. Verfahren nach einem der vorhergehenden Ansprüche, **dadurch gekennzeichnet, dass** als Bilderfassungseinheit eine Frontkamera (16) des Fahrzeugs, vorzugsweise ein Stereokamerasystem, verwendet wird.

4. Verfahren nach einem der vorhergehenden Ansprüche, **dadurch gekennzeichnet, dass** für mindestens eine Lichtverteilung ein Reflexionsbereich (32, 34) voreingestellt wird, in dem das bei dieser Lichtverteilung von lichtreflektierenden Elementen reflektierte Licht zu der ermittelten Helligkeit der detektierten Abbildung des Objekts (28) führen kann.

5. Verfahren nach Anspruch 4, **dadurch gekennzeichnet, dass** für mindestens zwei mögliche Lichtverteilungen des mindestens einen Frontscheinwerfers (26) je ein Reflexionsbereich (32, 34) voreinstellbar ist, und dass der Reflexionsbereich beim Klassifizieren des Objekts (28) berücksichtigt wird, wenn die dem Reflexionsbereich (32, 34) zugeordnete Lichtverteilung durch den mindestens einen Frontscheinwerfer (26) erzeugt wird.

6. Verfahren nach einem der Ansprüche 4 oder 5, **dadurch gekennzeichnet, dass** der Bereich außerhalb des voreingestellten Reflexionsbereichs (32, 34) als nichtreflektierender Bereich beim Klassifizieren von Objekten berücksichtigt wird, in dem das bei der dem voreingestellten Reflexionsbereich (32, 34) zugeordneten Lichtverteilung des Frontscheinwerfers (18) von lichtreflektierenden Elementen reflektierte Licht nicht zu einer ermittelten Helligkeit der detektierten Abbildung des Objekts (28) führen kann.

7. Verfahren nach einem der vorhergehenden Ansprüche 4 bis 6, **dadurch gekennzeichnet, dass** die Detektion der Abbildung des Objekts (28) in dem Reflexionsbereich (32, 34) als Klassifizierungsparameter von einem Bewertungsverfahren zum Klassifizieren des Objekts (28) verarbeitet wird, und dass weitere Klassifizierungsparameter, wie die Helligkeit und/oder Farbe der detektierten Abbildung, vorhandene Positionsinformationen über die Position des Objekts (28), vorzugsweise über die Entfernung des Objekts (28) zur Bilderfassungseinheit (76), vorhandene Größeninformationen des Objekts (28), durch ein Verfolgungsverfahren zur Verfolgung des Objekts (28) in mehreren nacheinander als Bildfolge aufgenommenen Bildern ermittelte Informationen und/oder die Lage des Objekts (28) zu weiteren detektierten Objekten, von den Bewertungsverfahren verarbeitet werden.

8. Verfahren nach einem der vorhergehenden Ansprüche, **dadurch gekennzeichnet, dass** zum Klassifizieren des Objekts (28) eine Wahrscheinlichkeit bestimmt wird, dass das detektierte Objekt (28) ein Objekt eines klassifizierten Objekttyps ist.

9. Verfahren nach einem der vorhergehenden Ansprüche, **dadurch gekennzeichnet, dass** die Grenze des Reflexionsbereiches (32, 36) nicht mit einer Isoluxlinie (30,34) der vom Frontscheinwerfer (26) erzeugten Helligkeitsverteilung zusammenfällt.

10. Vorrichtung zum Klassifizieren von in mindestens einem Bild einer Abbildung des Bereichs vor einem Fahrzeug detektierten Objekten in selbstleuchtende Objekte und ausschließlich reflektierende Objekte,
mit einer Bilderfassungseinheit (16), die mindestens eine Bildfolge mit mehreren Bildern mit einer Abbildung eines Bereichs vor dem Fahrzeug (12) erfasst, und
mit einer Verarbeitungseinheit (22),
die Bilddaten des erfassten Bildes verarbeitet und dabei die Abbildung mindestens eines Objekts (28) detektiert,
**dadurch gekennzeichnet, dass** die Verarbeitungseinheit (22) in Abhängigkeit der Bilder der Bildfolge jeweils die Position des detektierten Objektes (28) ermittelt,
dass die Verarbeitungseinheit (22) das detektierte Objekt (28) in Abhängigkeit der ermittelten Positionen des detektierten Objekts (28) und in Abhängigkeit der Lichtverteilung des durch den mindestens einen Frontscheinwerfer (26) des Fahrzeugs (12) abgestrahlten Lichts als selbstleuchtendes oder reflektierendes Objekt klassifiziert, und
dass die Verarbeitungseinheit (22) das detektierte Objekt (28) nur dann als reflektierendes Objekt klassifiziert, wenn die Abbildung des Objekts (28) in einem Bereich (32, 34) des Bildes detektiert wird, in dem auf Grund der aktuellen Lichtverteilung der durch den mindestens einen Frontscheinwerfer (26) des Fahrzeugs (12) abgestrahlten Lichtstrahlen eine für eine Reflexion eines reflektierenden Elements ausreichende Beleuchtungsstärke erzeugt wird.

## Claims

1. Method for classifying objects detected in at least one picture of an image of the area in front of a vehicle in self-illuminating objects and solely reflecting objects, wherein
a sequence of several pictures with an image of an area in front of the vehicle (12) is detected and image data corresponding to the pictures are produced, and
wherein during processing of the image data of the pictures captured at least one object (28) is detected,
**characterized in that** depending on the pictures of the picture sequence in each case the position of the detected object (28) is determined,
that the detected object (28) is classified, depending on the determined positions of the detected object (28) and depending on the light distribution of the light rays emitted by the at least one headlamp (26) of the vehicle (12) as self illuminating or reflecting object, and
that the detected object (28) can only be classified as reflecting object when the image of the object (28) is detected in an area (32, 34) of the picture in which, due to the actual light distribution of the light rays emitted by the at least one headlamp (26) of the vehicle (12) an illumination intensity that is sufficient for a reflection of a reflecting element is produced.

2. Method according to claim 1, **characterized in that** the pictures of the picture sequence are detected by means of an image detection unit (16) of the vehicle (12), that the image data of the pictures are produced by means of the image detection unit (16) and that during processing of the image data by means of an image processing algorithm processed by a unit processing unit (22) an image of the object (28) in at least two pictures is detected.

3. Method according to one of the preceding claims, **characterized in that** as image detection unit a front camera (16) of the vehicle, preferably a stereo camera system, is used.

4. Method according to one of the preceding claims, **characterized in that** for at least one light distribution a reflection area (32, 34) is preset, in which the light reflected at this light distribution by light-reflecting elements can lead to the determined brightness of the detected image of the object (28).

5. Method according to claim 4, **characterized in that** for at least two potential light distributions of the at least one headlamp (26) in each case one reflection area (32, 34) can be preset, and that during classification of the object (28) the reflection area is taken into consideration, if the light distribution assigned to the reflection area (32, 34) is produced by the at least one headlamp (26).

6. Method according to one of claims 4 or 5, **characterized in that** the area outside the preset reflection area (32, 34) is taken into consideration as non-reflecting area when classifying objects, in which the light reflected by light-reflecting elements at the light distribution of the headlamp (18) assigned to the preset reflection area (32, 34) cannot lead to a determined brightness of the detected image of the object (28)

7. Method according to one of preceding claims 4 to 6, **characterized in that** the detection of the image of the object (28) in the reflection area (32, 34) is processed as classification parameter by an evaluation procedure for classifying the object (28), and that further classification parameters, such as the brightness and/or colour of the detected image, existing position information on the position of the object (28), preferably on the distance of the object (28) to the image detection unit (76), existing size information of the object (28), information determined by a tracking method for tracking the object (28) in several pictures taken as a picture sequence and/or the position of the object (28) on further detected objects, are processed by the evaluation procedures.

8. Method according to one of the preceding claims, **characterized in that** for classifying the object (28) a probability is determined that the detected object (28) is an object of a classified object type.

9. Method according to one of the preceding claims, **characterized in that** the border line of the reflection area (32, 36) does not coincide with an isolux line (30, 34) of the brightness distribution produced by the headlamp (26).

10. Device for classifying objects detected in at least one picture of an image of the area in front of a vehicle in self-illuminating objects and solely reflecting objects,
comprising an image detection unit (16) detecting at least one picture sequence with several pictures with an image of an area in front of the vehicle (12), and
a processing unit (22),
that processes image data of the detected picture and thus detects the image of at least one object (28),
**characterized in that**
the processing unit (22) detects each position of the detected object (28) depending on the pictures of the picture sequence,
the processing unit (22) classifies the detected object (28) depending on the determined positions of the detected object (28) and depending on the light distribution of the light emitted by the at least one headlamp (26) of the vehicle (12) as self-illuminating or reflecting object, and
that the processing unit (22) only classifies the detected object (28) as reflecting object, when the image of the object (28) in an area (32, 34) of the picture is detected, in which due to the actual light distribution of the light rays emitted by the at least one headlamp (26) of the vehicle (12) an illumination intensity is produced that is sufficient for a reflection of a reflecting element.

## Revendications

1. Procédé de classement d'objets détectés dans au moins une image d'une représentation de la zone située à l'avant d'un véhicule dans des objets autolumineux et exclusivement réfléchissants,
selon lequel une succession de plusieurs images dotées d'une représentation d'une zone située à l'avant du véhicule (12) est acquise et des données d'image correspondant aux images sont produites, et
selon lequel au cours du traitement des données des images acquises, au moins un objet (28) est détecté,
**caractérisé en ce que** respectivement la position de l'objet (28) détecté est déterminée en fonction des images de la succession,
**en ce que** l'objet (28) détecté est classé en tant qu'objet autolumineux ou réfléchissant en fonction des positions déterminées de l'objet (28) détecté et en fonction de la distribution lumineuse des faisceaux lumineux émis par le ou les phares avant (26) du véhicule (12), et
**en ce que** l'objet (28) détecté ne peut être classé en tant qu'objet réfléchissant que lorsque la représentation de l'objet (28) est détectée dans une zone (32, 34) de l'image, dans laquelle, sur la base de la distribution lumineuse actuelle des faisceaux lumineux émis par le ou les phares avant (26) du véhicule (12), un éclairement suffisant pour une réflexion d'un élément réfléchissant est produit.

2. Procédé selon la revendication 1, **caractérisé en ce que** les images de la succession d'images sont acquises à l'aide d'une unité d'acquisition d'images (16) du véhicule (12), de sorte que les données des images sont produites à l'aide de l'unité d'acquisition d'image (16), et **en ce que** lors du traitement des données d'image, une représentation de l'objet (28) dans au moins deux images est détectée à l'aide d'un algorithme de traitement d'image exécuté par une unité de traitement (22).

3. Procédé selon l'une quelconque des revendications précédentes, **caractérisé en ce qu'**une caméra frontale (16) du véhicule est utilisée, de préférence un système de caméra vidéo, comme unité d'acquisition d'image.

4. Procédé selon l'une quelconque des revendications précédentes, **caractérisé en ce que** pour au moins une distribution lumineuse, une zone de réflexion (32, 34) est préréglée, dans laquelle la lumière réfléchie par des éléments réfléchissant la lumière dans le cas de cette distribution lumineuse peut entraîner la luminosité déterminée de la représentation détectée de l'objet (28).

5. Procédé selon la revendication 4, **caractérisé en ce que** pour au moins deux distributions lumineuses possibles du ou des phares avant (26), respectivement une zone de réflexion (32, 34) peut être préréglée, et **en ce que** la zone de réflexion est prise en compte lors du classement de l'objet (28), lorsque la distribution lumineuse associée à la zone de réflexion (32, 34) est produite par le ou les phares avant (26).

6. Procédé selon l'une quelconque des revendications 4 ou 5, **caractérisé en ce que** la zone à l'extérieur de la zone de réflexion (32, 34) préréglée n'est pas prise en compte en tant que zone non réfléchissante lors du classement d'objets, zone dans laquelle la lumière réfléchie par des éléments réfléchissant la lumière dans le cas de la distribution lumineuse du phare avant (18) associée à la zone de réflexion (32, 34) préréglée ne peut entraîner de luminosité déterminée de la représentation détectée de l'objet (28).

7. Procédé selon l'une quelconque des revendications 4 à 6, **caractérisé en ce que** la détection de la représentation de l'objet (28) dans la zone de réflexion (32, 34) est traitée comme un paramètre de classement par un procédé d'évaluation destiné à classer l'objet (28), et **en ce que** d'autres paramètres de classement, tels que la luminosité et/ou la couleur de la représentation détectée, des informations de position présentes concernant la position de l'objet (28), de préférence concernant l'éloignement de l'objet (28) par rapport à l'unité d'acquisition d'images (76), des informations présentes sur la taille de l'objet (28), des informations déterminées par un procédé de poursuite destiné à poursuivre l'objet (28) dans plusieurs images enregistrées successivement en tant que succession d'images et/ou la position de l'objet (28) par rapport à d'autres objets détectés sont traités par les procédés d'évaluation.

8. Procédé selon l'une quelconque des revendications précédentes, **caractérisé en ce que** pour classer l'objet (28), une probabilité est déterminée, **en ce que** l'objet détecté (28) est un objet d'un type d'objet classé.

9. Procédé selon l'une quelconque des revendications précédentes, **caractérisé en ce que** la limite de la zone de réflexion (32, 36) ne coïncide pas avec une courbe d'isoéclairement (30, 34) de la distribution de luminosité produite par le phare avant (26).

10. Dispositif de classement d'objets détectés dans au moins une image d'une représentation de la zone située à l'avant d'un véhicule dans des objets autolumineux et des objets exclusivement réfléchissants,
comprenant une unité d'acquisition d'image (16) acquérant au moins une succession de plusieurs images dotées d'une représentation d'une zone située à l'avant du véhicule (12), et
comprenant une unité de traitement (22),
les données d'image de l'image acquise sont traitées et, à cette occasion, la représentation d'au moins un objet (28) est détectée,
**caractérisé en ce que** l'unité de traitement (22) détermine, en fonction des images de la succession, respectivement la position de l'objet (28) détecté,
**en ce que** l'unité de traitement (22) classe l'objet (28) détecté en fonction des positions déterminées de l'objet (28) détecté et en fonction de la distribution lumineuse de la lumière émise par le ou les phares avant (26) du véhicule (12) en tant qu'objet autolumineux ou réfléchissant, et
**en ce que** l'unité de traitement (22) ne classe l'objet (28) détecté en tant qu'objet réfléchissant que lorsque la représentation de l'objet (28) dans une zone (32, 34) de l'image est détectée, zone dans laquelle, sur la base de la distribution lumineuse actuelle des faisceaux lumineux émis par le ou les phares avant (26) du véhicule (12), un éclairement suffisant pour une réflexion d'un élément réfléchissant est produit.
